# EUROPÄISCHE PATENTSCHRIFT

(11) **EP 1 963 821 B1**
(45) Veröffentlichungstag und Bekanntmachung des Hinweises auf die Patenterteilung: **18.03.2020**
(21) Anmeldenummer: 06841313.7
(22) Anmeldetag: 08.12.2006
(51) Int. Cl.: G01N 21/05, G01N 21/64, G01N 21/53, B01L 3/00, G01N 21/03

(54) **MESSCHIP**
MEASUREMENT CHIP
PUCE DE MESURE

(30) Priorität: 23.12.2005 DE 102005062174
(43) Veröffentlichungstag der Anmeldung: 03.09.2008
(73) Patentinhaber: Fraunhofer-Gesellschaft zur Förderung der angewandten Forschung e.V., 80686 München (DE)
(72) Erfinder: DRESE, Klaus-Stefan, 55130 Mainz (DE); NAHRSTEDT, Elzbieta, 55270 Ober-Olm (DE); FRESE, Ines, 55120 Mainz (DE)
(74) Vertreter: WSL Patentanwälte Partnerschaft mbB
(86) Internationale Anmeldenummer: PCT/EP2006/069501
(87) Internationale Veröffentlichungsnummer: WO 2007/074038

(56) Entgegenhaltungen:
- EP-A1- 0 488 947
- WO-A-99/44217
- DE-A1- 19 647 644
- GB-A- 2 174 802
- US-A- 5 489 988
- US-A1- 2003 235 924
- US-B1- 6 906 797

## Beschreibung

### Gegenstand der Erfindung

Die Erfindung betrifft einen Messchip für die Durchführung von Messungen der Transmission und/oder Emission und/oder Streuung von Licht durch eine Fluidprobe in einem Betreibergerät sowie ein entsprechendes Messsystem, das wenigstens den Messchip und das Betreibergerät umfasst.

### Hintergrund der Erfindung

Analytische Messgeräte für Transmissions-, Emissions- oder Streuungsmessungen an flüssigen oder gasförmigen Proben (Fluidproben) sind in vielfältigster Ausgestaltung bekannt. Eine Anwendung solcher Messgeräte ist die Bestimmung der Konzentration eines Analyten in einer Fluidprobe. Hierfür wird eine Fluidprobe in eine Messzelle eingebracht und die Konzentration eines zu bestimmenden Analyten anhand der Absorption bzw. Transmission eines eingekoppelten Lichtstrahls oder anhand der Emission von Licht, das von der Probe aufgrund von Fluoreszenz, Lumineszenz, Chemilumineszenz oder Streuung abgegeben wird, gemessen. Die Absorption oder Emission von Licht kann durch den Analyten selbst oder durch einen in Abhängigkeit von der Konzentration des Analyten in der Probe vorhandenen anderen Stoff bewirkt bzw. hervorgerufen werden.

In der Bio- und Umweltanalytik werden zur Konzentrationsbestimmung von Analyten häufig chemische oder enzymatische Farbreaktionen eingesetzt. In Abhängigkeit von der Konzentration des zu untersuchenden Analyten wird ein Substrat chemisch oder enzymatisch in ein Produkt umgesetzt, das gegenüber dem Ausgangssubstrat veränderte Absorptions- oder Fluoreszenzeigenschaften besitzt. In eine Messzelle, die das Produkt enthält, wird Licht eingekoppelt und die Absorption bzw. Transmission des eingekoppelten Lichts oder eine durch das eingekoppelte Licht hervorgerufene Fluoreszenzemission gemessen. Die gemessene Absorption bzw. Transmission oder Fluoreszenz steht in direktem Verhältnis zu der Konzentration des zu untersuchenden Analyten.

Je nach Aufgabenstellung werden verschiedene Methoden und Geräte eingesetzt. Ein Laborstandardgerät ist das Fluoreszenzspektrometer, das als Messzellen Küvetten für die Aufnahme von Fluidproben verwendet.

Ein Problem bei der Messung mit herkömmlichen Fluoreszenzspektrometern ist, dass nur ein Bruchteil, etwa 1/6, der emittierten Fluoreszenzstrahlung gemessen wird, da Licht von einer Probe radial abgestrahlt wird, der Detektor aber üblicherweise nur auf einer Seite der Probe bzw. der Messzelle angeordnet ist. Diese Spektrometer haben entweder eine geringe Empfindlichkeit oder erfordern Photomultiplier, die die geringe Strahlung verstärken. Um das Problem der geringen Empfindlichkeit zu überwinden, werden bei anderen bekannten Geräten viele Detektoren um die Probe bzw. die Messzelle herum verteilt, um möglichst viel emittierte Strahlung aufzunehmen. Dies ist jedoch sehr aufwendig und teuer.

Eine weitere Anwendung von analytischen Messgeräten ist die ortsauflösende Messung von Fluoreszenz oder die winkelabhängige Messung von Streustrahlung. Beispielsweise wird in der Umweltanalytik der Kolloidanteil in Wasserproben gemäß normierten Messverfahren anhand der Winkel, bei denen Streuungsmaxima auftreten, bzw. anhand der Verhältnissen von Streulichtintensitäten bei verschiedenen vorgegebenen Streuwinkeln bestimmt. Hierfür sind winkelauflösende Streuungsmessungen für die Proben notwendig. Bekannte Geräte für die winkelabhängige Fluoreszenz- oder Streuungsmessung verwenden entweder eine Vielzahl von Detektoren, die in festgelegten Messwinkeln um die Messzelle herum angeordnet sind, oder sie verwenden ein Goniometer, bei dem ein an einem rotierenden Arm befestigter Detektor über einen Winkelbereich um die Messzelle herum bewegt wird. Diese Vorrichtungen sind apparativ sehr aufwendig, teuer und platzaufwendig. Für den mobilen Einsatz sind sie gänzlich ungeeignet.

Die EP 1 494 007 A1 beschreibt ein Multiwellsystem für die Fluoreszenz- oder Absorptionsmessung, bei dem durch Umlenkung des einfallenden Lichtstrahls an einem Spiegel gewährleistet wird, dass nur das von der Probe abgegebene bzw. das durch die Probe hindurchtretende Licht zu einem Detektor gelangt, nicht aber das einfallende Licht. Die Richtung des einfallenden Lichts ist parallel zu derjenigen des emittierten Lichts. Die Fluoreszenzmessung hat bei dieser Vorrichtung den oben bereits beschriebenen Nachteil, dass nur ein Bruchteil des abgestrahlten Fluoreszenzlichts zum Detektor gelangt.

Die US 4,254,223 beschreibt eine Vorrichtung für die Transmissionsmessung an Flüssigkeiten unter Verwendung eines Probengefäßes mit einem V-förmigen, reflektierenden Boden. Die Strahlengänge des einfallenden Lichts und des ausfallenden Lichts sind parallel. Das Licht tritt aufgrund der Reflexion an dem V-förmigen Boden über eine längere Wegstrecke durch die Flüssigkeit. Für die Messung von Lichtemission oder -streuung ist die Vorrichtung nicht geeignet.

Die EP 1 247 577 A2 offenbart eine Methode zum Feststellen, ob in einem Mikrokanalsystem eine Flüssigkeit oder ein Gas geführt wird. Bei diesem System wird ein Mikrokanal umgelenkt, so dass an den Kanalwänden zwei Reflexionsflächen entstehen, die in einem Winkel von 90° zueinander stehen. Zwischen den Reflexionsflächen befindet sich lichtdurchlässiges Substratmaterial. Trifft von einer Lichtquelle eingekoppeltes Licht in einem Winkel von 45° auf die erste Reflexionsfläche, wird es in einem Winkel von 90° zur zweiten Reflexionsfläche und von dieser erneut in einem Winkel von 90° zu einem Detektor reflektiert. Die Reflexionsflächen sind totalreflektierend, wenn der Mikrokanal Gas führt, so dass nahezu das gesamte Licht von der Lichtquelle auch am Detektor ankommt. Wenn der Mikrokanal Flüssigkeit führt, dann sind die Flächen nicht totalreflektierend, so dass weniger oder kein Licht von der Lichtquelle beim Detektor ankommt. Das beim Detektor ankommende Licht zeigt an, ob der Mikrokanal Gas oder Flüssigkeit führt.

Die US 5,599,503 offenbart eine miniaturisierte Detektorzelle, in der einfallendes Licht mehrfach innerhalb einer Messstrecke reflektiert wird, um auch bei kleinen Proben einen möglichst langen Kontakt des einfallenden Lichts mit der Probe zu gewährleisten.

Die DE 102 45 845 offenbart einen Messchip mit einer Vielzahl von pyramidenförmigen Erhebungen in der Messzone, die der Vergrößerung der Oberfläche und dadurch einer Erhöhung der Lichtintensität der Messung dienen.

Die WO 99/44217 offenbart mikrofluidische Vorrichtungen und Systeme mit integrierten optischen Bauteilen zur Durchführung von optischen Analysen von Fluiden durch Transmissions-, Emissions- und Streuungsmessungen. Die Vorrichtung umfasst eine transparente Grundplatte mit einer Messzelle und einem optischen Detektor außerhalb der Grundplatte. Das System hat unter anderem den Nachteil, dass ein hoher Anteil des aus der Messzelle emittierten und/oder gestreuten Lichts nicht zum Detektor gelangt und daher nicht erfasst werden kann.

Die EP 0 488 947 A1 beschreibt eine Detektorzelle mit einem Wechselwirkungsbereich für die Probe und die Messstrahlung, wobei der Wechselwirkungsbereich als Kanalstück ausgebildet ist, das im Bereich seines Bodens und seiner Deckfläche eine die Messstrahlung gut reflektierende Oberfläche aufweist, wobei das Anregungslicht über eine Lichtfaser in die ansonsten optisch dichte Messzelle eingestrahlt wird und die Transmissionsstrahlung die Messzelle über eine zweite Lichtfaser verlässt, nachdem der Lichtstrahl zuvor von den inneren Oberflächen der Messzelle mehrfach reflektiert wurde.

### Aufgabe der Erfindung

Die Aufgabe der vorliegenden Erfindung bestand darin, ein System für die optische Konzentrations- und/oder Teilchengrößenbestimmung in Fluidproben bereitzustellen, das eine gegenüber bekannten Systemen ähnliche oder höhere Empfindlichkeit aufweist und gleichzeitig erheblich einfacher, preiswerter und auch in Mikrotechnik herstellbar ist.

### Beschreibung der Erfindung

Gelöst wird die erfindungsgemäße Aufgabe durch einen Messchip für die Durchführung von Messungen der Emission und/oder Streuung von Licht durch eine Fluidprobe in einem Betreibergerät nach Anspruch 1.

Der erfindungsgemäße Messchip ist als ein Teil bzw. Austauschteil einer Messvorrichtung vorgesehen, die auch ein Betreibergerät für die Aufnahme des Messchips umfasst. Das Betreibergerät weist zweckmäßigerweise einen Raum für die Aufnahme des Messchips auf, in dem der Messchip entweder fest montiert ist oder in den er, was besonders bevorzugt ist, leicht austauschbar eingesetzt und entfernt werden kann. Ein Betreibergerät für den Einsatz mit dem erfindungsgemäßen Messchip weist wenigsten einen Detektor oder mehrere Detektoren für die Detektion von aus dem Messchip ausgekoppeltem Licht auf. Das Betreibergerät kann weiterhin Anschlüsse für eine Fluidverbindung mit den Fluidkanälen des Messchips sowie elektronische Bauteile für die Auswertung und/oder Weiterleitung der von den Detektoren empfangenen Signale, Chemikalienvorräte, der nicht auf dem Chip bevorrateten Chemikalien, eine Fluidaktuatorik zum Fördern der Fluide aufweisen. Auf diese Weise können auch kinetische, kontinuierliche und/oder auch Echtzeitmessungen durchgeführt werden. Wenn die Messvorrichtung zur Durchführung von Transmissions- und/oder Fluoreszenzmessungen verwendet werden soll, weist das Betreibergerät zweckmäßigerweise wenigstens eine Lichtquelle für das Einkoppeln von Licht in den Messchip auf sowie optional einen oder mehrere Lichtfilter, die nur vorgegebene Wellenlängenbereiche des Lichts hindurchtreten lassen. Die Detektoren für die Detektion von Lichtsignalen sind an sich bekannte Bauteile, die auf dem Markt erhältlich sind. Geeignet sind beispielsweise CCD-Chips. Für bestimmte Anwendungen, wie beispielsweise winkelabhängige Messungen, sind in dem Betreibergerät mehrere Detektoren und/oder ortsauflösende Detektoren vorgesehen.
Ein besonderer Vorteil des erfindungsgemäßen Messchips ist, dass die Grundplatte des Messchips aus transparentem, abformbarem Material, vorzugsweise Polymermaterial sehr preiswert und mit hoher Präzision über Abformverfahren, wie beispielsweise Spritzguss, Heißprägen oder Reaktionsgießen, als einstückiges Formteil hergestellt werden kann. Bevorzugt werden Abformverfahren und Materialien derart ausgewählt, dass die Spiegelflächen ohne weitere Nachbearbeitung bereits im Abformschritt erhalten werden. Zusätzliche Metallbeschichtungen der Spiegelflächen sind möglich. Die Grundplatte kann den gesamten Messchip darstellen, was ganz besonders preiswert ist. Oder die Grundplatte stellt den Hauptteil des Messchips dar, wenn an der Grundplatte noch separate Elemente vorgesehen sein sollen, wie beispielsweise Anschlussstücke für die Fluidkanäle, weitere reflektierende Flächen (Spiegelflächen) in der Form von Abdeckungen oder Folien oder Befestigungs- oder Haltelemente, die nach der Herstellung der Grundplatte an dieser angebracht werden. Der Messchip kann auf diese Weise als ein preiswertes Austausch- oder Einwegteil der Messvorrichtung bereitgestellt werden, wogegen das Betreibergerät, das die im Verhältnis zum Messchip sehr teuren Bauteile enthält, wie z. B. Detektoren, Lichtquellen, Filter, Auswertungselektronik etc., nicht ausgetauscht werden muss. Auf diese Weise können in dem gleichen Betreibergerät viele nur einmal verwendbare Messchips und/oder verschiedenartige Messchips mit unterschiedlichem Aufbau und für verschiedene Messanwendungen verwendet werden.

Die Grundplatte des erfindungsgemäßen Messchips weist wenigstens eine Messzelle sowie wenigstens einen Fluidkanal für die Zuführung von Fluid zu der Messzelle und wenigstens einen Fluidkanal für die Abführung von Fluid aus der Messzelle auf. Dies stellt die einfachste Ausführungsform eines erfindungsgemäßen Messchips dar, wobei jedoch vielfältige Abwandlungen möglich sind, die alle in den Schutzumfang der Erfindung gemäß den Patentansprüchen fallen.

In einer alternativen Ausführungsform weist der erfindungsgemäße Messchip mehrere Messzellen auf, die in Fluidströmungsrichtung in Reihe hintereinander in der Grundplatte angeordnet sein können, um beispielsweise Reaktionsverläufe oder Reaktionskinetiken zu bestimmen.

In einer weiteren alternativen Ausführungsform weist der erfindungsgemäße Messchip mehrere Messzellen auf, die bezüglich des Fluidstromes nebeneinander (parallel) in der Grundplatte angeordnet sind, wodurch beispielsweise die Durchführung mehrerer Parallelmessungen möglich ist. Mehreren nebeneinander in der Grundplatte angeordneten Messzellen können über verschiedene Fluidkanäle unterschiedliche Fluide parallel zugeführt werden oder es kann jeder Messzelle das gleiche Fluid zugeführt werden, um beispielsweise parallel Transmissions-, Fluoreszenzoder Streuungsmessungen bei unterschiedlichen Wellenlängen des Anregungslichts oder für unterschiedliche Wellenlängen des emittierten Lichts (zum Beispiel unter Verwendung unterschiedlicher Filter oder Detektoren im Betreibergerät) durchzuführen.

Grundsätzlich ist zwischen zwei Arten von Messungen zu unterscheiden, nämlich Messungen von Lichtemission ohne Anregungslicht, wie beispielsweise Chemilumineszenzmessungen, und Messungen, die ein Anregungslicht erfordern, wie beispielsweise Transmissions-, Fluoreszenzoder Streuungsmessungen. Der Begriff "Anregungslicht" wird in dieser Beschreibung auch im Zusammenhang mit Transmissionsmessungen verwendet und bezeichnet das für die Transmissionsmessung eingekoppelte Licht.

Für Messungen von Lichtemissionen, die ein Anregungslicht erfordern, was bei der überwiegenden Zahl der Messmethoden der Fall ist, sind bei einer bevorzugten Ausführungsform des erfindungsgemäßen Messchips in der Grundplatte außerhalb der Messzelle weitere Spiegelflächen vorgesehen, die so angeordnet sind, dass sie von einer außerhalb des Messchips angeordneten Lichtquelle in den Messchip eingekoppeltes Anregungslicht in die Messzelle lenken. Dies ist beispielsweise für Transmissions-, Fluoreszenz- und Streuungsmessungen erforderlich.

In einer weiteren bevorzugten Ausführungsform des erfindungsgemäßen Messchips sind in der Grundplatte außerhalb der Messzelle weitere Spiegelflächen vorgesehen sind, die so angeordnet sind, dass sie durch die Messzelle hindurchtretendes Transmissionslicht, das als Anregungslicht in den Messchip eingekoppelt wird, aus dem Messchip vorzugsweise in Richtung eines in einem Betreibergerät vorgesehenen Lichtdetektors lenken. Dies ist beispielsweise für Transmissionsmessungen erforderlich, aber auch für Fluoreszenz- und Streuungsmessungen, bei denen gleichzeitig die Transmission als Messgröße, als Kontrollwert oder zu einem anderen Zweck bestimmt wird.

Für Anwendungen, bei denen nur Emission ohne Anregungslicht gemessen wird, wie beispielsweise bei Chemilumineszenzmessungen, kommt der erfindungsgemäße Messchip ohne die vorgenannten Spiegelflächen für das Ein- und Auskoppeln von Anregungslicht von einer außerhalb des Messchips angeordneten Lichtquelle aus.

Ist der erfindungsgemäße Messchip für das Einkoppeln von Anregungslicht über optische Spiegelflächen ausgelegt, dann wird das Anregungslicht in einer Richtung in die Messstrecke eingeleitet und transmittiertes Licht auf der gegenüberliegenden Seite der Messstrecke wieder abgeleitet. Die Raumrichtung der Messzelle, in der das Anregungslicht im vorgenannten Sinne durch die Messzelle hindurchtritt, wird im Zusammenhang der vorliegenden Beschreibung unabhängig von den Abmessungen der Messzelle als die "Längsachse" der Messzelle bezeichnet. Je größer die Abmessung der Messzelle in Richtung ihrer Längsachse ist, desto mehr Emissionsstrahlung oder Streustrahlung verlässt die Messzelle seitlich, d.h. radial zu ihrer Längsachse bzw. radial zur Richtung des eingeleiteten Anregungslichts. Die erfindungsgemäßen Spiegelflächen, die in der Grundplatte des Messchips für die Lenkung des von einer Fluidprobe in der Messzelle emittierten und/oder gestreuten Lichts aus dem Messchip vorgesehen sind (im Gegensatz zu Spiegelflächen für die Lenkung von eingekoppeltem und ggf. transmittiertem Anregungslicht), lenken das Licht auf einen oder mehrere in einem Betreibergerät vorgesehene Lichtdetektoren. Zweckmäßigerweise ist der Detektor oder sind die Detektoren in dem Betreibergerät unterhalb oder oberhalb der Messstrecke angeordnet, so dass ein Teil des abgestrahlten Lichts direkt auf den Detektor oder die Detektoren fällt. Der restliche Anteil des seitlich der Messzelle abgestrahlten Lichts oder zumindest ein großer Teil davon wird über die Spiegelflächen in der Grundplatte des Messchips auf den Detektor oder die Detektoren gelenkt. Dadurch wird ein gegenüber vielen bekannten Messvorrichtungen erheblich höherer Anteil des abgestrahlten Lichts erfasst, wodurch die Messungen deutlich empfindlicher werden.

In einer bevorzugten Ausführungsform des erfindungsgemäßen Messchips besitzt die Messzelle senkrecht zu Ihrer Längsachse einen rechteckigen oder quadratischen Querschnitt. In einer alternativen Ausführungsform besitzt die Messzelle senkrecht zu Ihrer Längsachse einen ovalen, ellipsenförmigen oder kreisförmigen Querschnitt.

Eine "Fluidprobe" im Sinne der vorliegenden Beschreibung und der Patentansprüche kann eine gasförmige oder flüssige Probe sein. Eine gasförmige Probe kann beispielsweise ein reines Gas, ein Gasgemisch oder ein Flüssigkeitsbestandteile enthaltendes Aerosol sein. Eine flüssige Probe kann beispielsweise eine flüssige Reinsubstanz, eine Lösung, eine Suspension, eine Dispersion, eine Emulsion oder eine Mischung einer oder mehrerer der vorgenannten sein.

Der Begriff "Spiegelflächen" im Sinne der vorliegenden Beschreibung und der Patentansprüche kann, selbst wenn der Begriff im Plural verwendet wird, auch eine einzelne, zusammenhängende Spiegelfläche bedeuten. Wenn beispielsweise angegeben ist, dass Spiegelflächen vorgesehen sind, die durch den Messchip hindurchtretendes Transmissionslicht aus dem Messchip in Richtung eines in einem Betreibergerät vorgesehenen Lichtdetektors lenken, dann wird dies in der Regel und vorzugsweise durch eine einzelne, zusammenhängende Spiegelfläche, die im Strahlengang des Transmissionslichts angeordnet ist, realisiert. Spiegelflächen im Sinne der vorliegenden Erfindung können ebene Flächen oder gekrümmte oder gebogene Flächen (konvexe oder konkave Flächen) sein. Gekrümmte Spiegelflächen werden zweckmäßigerweise zur Umlenkung oder Bündelung von Licht, das in verschiedene Raumrichtungen abgestrahlt wird, auf einen Detektor oder einen anderen Empfänger, wie beispielsweise einen Lichtleiter zur Weiterleitung des Lichts, eingesetzt.

Spiegelflächen können erfindungsgemäß auf verschiedene Weisen erzeugt bzw. bereitgestellt werden. Der erfindungsgemäße Messchip kann auch verschiedene Arten von Spiegelflächen umfassen. Eine erfindungsgemäß besonders bevorzugte Art der Bereitstellung von Spiegelflächen in bzw. an dem erfindungsgemäßen Messchip ist das Vorsehen von Grenzflächen an zwei unterschiedlichen Medien, die das auftreffende Licht reflektieren. Ganz besonders bevorzugt ist hierfür die Grenzfläche zwischen dem Polymermaterial der Grundplatte des Messchips und einem gasförmigen oder flüssigen Medium, vorzugsweise einem gasförmigen Medium und besonders bevorzugt Luft. Der Beugungswinkel des Lichts an einer solchen Grenzfläche hängt von den materialspezifischen Brechungsindizes und dem Eintrittswinkel des Lichts ab. Bei einem eigentlich transparenten Material, wie es für das Polymermaterial der Grundplatte des Messchips bevorzugt ist, wird daher die Transmission des Lichts bei Unterschreiten eines bestimmten Eintrittswinkels des Lichts in eine totale Reflexion des Lichts übergehen. Der materialspezifische Brechungsindex des Polymermaterials wird zum einen von dem verwendeten Polymer selbst und zum anderen von der Oberflächenbeschaffenheit bzw. der Oberflächenrauheit abhängen. Erfindungsgemäß bevorzugt sind daher das Polymermaterial, das gasförmige oder flüssige Medium und die Oberflächenbeschaffenheit der als Spiegelflächen ausgebildeten Grenzflächen so ausgewählt, dass die als Spiegelflächen ausgebildeten Grenzflächen unterhalb eines vorgegebenen Lichteinfallswinkels, vorzugsweise bei einem Lichteinfallswinkel kleiner oder gleich 45° zur Oberfläche bzw. größer oder gleich 45° zur Normalen der Oberfläche totalreflektierend sind.

Das Polymermaterial, aus dem die Grundplatte des erfindungsgemäßen Messchips hergestellt ist, ist vorzugsweise Acrylat, Polymethylacrylat, Polymethylmethacrylat, Polycarbonat, Polystyrol, Polyimid, Cycloolefincopolymer (COC), Cycloolefinpolymer (COP), Polyurethan, Epoxidharz, halogeniertes Acrylat, deuteriertes Polysiloxan, PDMS, fluoriertes Polyimid, Polyetherimid, Perfluorcyclobutan, Perfluorvinylethercopolymer (Teflon AF), Perfluorvinylethercyclopolymer (CYTOP), Polytetrafluorethylen (PTFE), fluoriertes Polyarylethersulfid (FRAESI), anorganisches Polymerglas, Polymethylmethacrylat-Copolymer (P2ANS). Unter dem Begriff "Polymermaterial" werden im Sinne der vorliegenden Erfindung auch Gläser verstanden, die sich zur Herstellung des erfindungsgemäßen Messchips eignen.

Bei dem erfindungsgemäßen Messchip sind die Spiegelflächen in der Grundplatte so angeordnet, dass an den Spiegelflächen reflektiertes Licht stets in das Polymermaterial der Grundplatte zurück reflektiert wird. In die Grundplatte des erfindungsgemäßen Messchips eingekoppeltes Licht und von der Fluidprobe aus der Messzelle abgegebenes Licht wird somit bis zu der Stelle, wo es für ein Auftreffen auf einen Detektor oder mehrere Detektoren, die Grundplatte verlässt, ausschließlich in dem Polymermaterial der Grundplatte und nicht zwischenzeitlich durch ein anderes Medium geleitet, ausgenommen einer möglichen Rückreflexion in die Messzelle. Zur Vermeidung von Rückreflexionen kann auch ein Index-Matching-ÖI zwischen die Lichtaus- und Lichteintrittsflächen des Messchips und des Betreibergeräts eingebracht werden.

Der erfindungsgemäße Messchip eignet sich nicht nur für die Durchführung von Messungen als solche an einer Fluidprobe, sondern kann in der Grundplatte auch Kanäle und Räume für die Durchführung von Reaktionen und/oder das Mischen von Fluiden aufweisen. Beispielsweise kann der erfindungsgemäße Messchip mehrere Fluidzuführungskanäle für das Einleiten verschiedener Fluide aufweisen, die zur Durchführung einer chemischen, enzymatischen oder sonstigen Reaktion erforderlich sind. In einer erfindungsgemäß bevorzugten Ausführungsform ist der Messchip für die Durchführung einer enzymatischen Reaktion, einer Antikörperreaktion oder einer chemischen Reaktion ausgelegt. Beispielsweise kann der erfindungsgemäße Messchip für die Durchführung von ELISA-Tests ausgelegt sein. Dafür ist in der Grundplatte ein Reaktionsraum vorgesehen, der mit mehreren Fluidzuführungskanälen verbunden ist. In dem Reaktionsraum kann ein erster Antikörper gegen einen zu bestimmenden Analyten an der Wand des Reaktionsraumes immobilisiert sein, oder der Antikörper kann für eine Immobilisierung in dem Reaktionsraum durch einen ersten Fluidzuführungskanal eingeleitet werden. Durch weitere Fluidzuführungskanäle können eine den Analyten enthaltende Probe, Waschlösungen, einen für den ELISA-Test erforderlichen zweiten Antikörper enthaltende Lösung und Lösungen für die Durchführung einer Farbreaktion eingeleitet werden. Nach der Durchführung der Farbreaktion im ELISA-Test wird die Lösung aus dem Reaktionsraum in die Messzelle geleitet und dort eine Absorptionsmessung (Transmissionsmessung) und/oder eine Fluoreszenz- oder Chemilumineszenzmessung durchgeführt.

Eine weitere bevorzugte Anwendung für den erfindungsgemäßen Messchip ist die Durchführung von Streuungsmessungen in winkelabhängiger oder winkelunabhängiger Art und Weise. Durch Streuungsmessungen kann beispielsweise der Kolloidanteil in einer Flüssigkeit und/oder die Teilchengrößen und Teilchengrößenverteilungen in einer Suspension oder Dispersion bestimmt werden. Hierfür wird die Reflexion von einfallendem Licht (Anregungslicht) an den Partikeln in einer Flüssigkeit gemessen. Die Streuwinkel, bei denen Streuungsmaxima auftreten, bzw. die Verhältnisse der reflektierten Streulichtintensitäten bei verschiedenen Streuwinkeln geben dabei Aufschluss über die vorgenannten Größen. Beispielsweise ist der Anteil an Rückreflexion, d.h. der Reflexion in einem Winkel kleiner 90° zur Richtung des einfallenden Anregungslichts, umso kleiner, je größer die Teilchen in einer Suspension oder Dispersion sind.

In einer besonders bevorzugten Ausführungsform des erfindungsgemäßen Messchips für die Durchführung von winkelabhängigen Streuungsmessungen (z.B. zur Bestimmung der Trübung und/oder zur Partikelgrößenmessung) sind außerhalb der Messzelle Spiegelflächen so angeordnet, dass sie von einer Fluidprobe in der Messzelle gestreutes Licht so ablenken, dass es an verschiedenen Stellen die Grundplatte des Messchips verlässt und in einem Betreibergerät auf verschiedene Lichtdetektoren, die jeweils für einen Streuwinkel bzw. Streuwinkelbereich stehen, oder auf verschiedene Bereiche eines ortsauflösenden Lichtdetektors fällt. Für die winkelabhängige Umlenkung von gestreutem Licht aus dem Messchip können in verschiedenen Winkeln zu der Messzelle einzelne voneinander getrennte Spiegelflächen vorgesehen sein. Alternativ kann eine zusammenhängende Spiegelfläche vorgesehen sein, die in der Weise gekrümmt ist, dass sie das gestreute Licht streuwinkelabhängig zu den verschiedenen Detektoren oder an verschiedene Stellen des ortsauflösenden Detektors lenkt.

Weitere Vorteile, Merkmale und Anwendungsmöglichkeiten der vorliegenden Erfindung werden deutlich anhand der folgenden Beschreibung einiger bevorzugter Ausführungsformen sowie der dazugehörigen Figuren.

### Figuren

- Figur 1: zeigt eine schematische Darstellung einer Ausführungsform des erfindungsgemäßen Messchips von oben.
- Figur 2: zeigt Querschnitte der erfindungsgemäßen Messzelle gemäß Figur 1 entlang den Linien A-A (Figur 2a) und B-B (Figur 2b).
- Figuren 3-6: zeigen schematische Darstellungen von alternativen Ausführungsformen des erfindungsgemäßen Messchips von oben.
- Figur 7: zeigt Querschnitte durch alternative Ausführungsformen erfindungsgemäßer Messchips zur Erläuterung alternativer Ausführungsformen der Spiegelflächen zur Umlenkung von Emissions- oder Streulicht.
- Figur 8: zeigt eine alternative Ausführungsform des erfindungsgemäßen Messchips zur Messung winkelabhängiger Streuung bei zwei vorgegebenen Streuwinkeln.

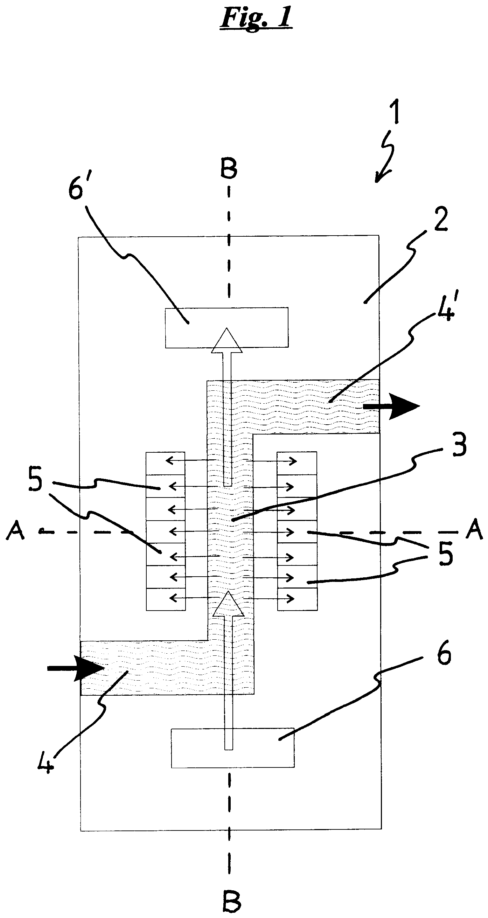

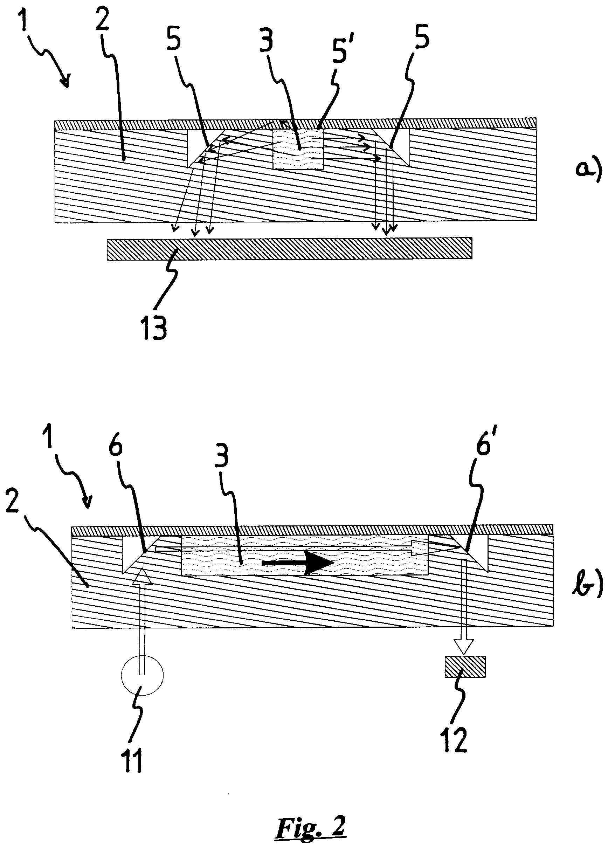

Figur 1 zeigt eine schematische Darstellung eines erfindungsgemäßen Messchips 1 von oben mit einer Grundplatte 2 aus einem transparenten Polymermaterial. In der Grundplatte 2 sind Fluidkanäle 4 und 4' für die Zu- und Abführung von Fluid ausgebildet. Die Fluidströmungsrichtung ist durch schwarze Pfeile angegeben. Zwischen den Fluidkanälen 4, 4' befindet sich eine längliche Messzelle 3, die, wie es in Figur 2a) zu sehen ist, einen im wesentlichen quadratischen Querschnitt aufweist. Die Fluidkanäle 4, 4' treffen im Wesentlichen senkrecht auf die Längsachse der Messzelle 3, so dass in der Verlängerung der Längsachse der Messzelle 3 planare Wandflächen für die Einleitung von Anregungslicht vorhanden sind. In der weiteren Verlängerung der Längsachse der Messzelle 3 sind in der Grundplatte 2 Spiegelflächen 6 und 6' für das Ein- und Auskoppeln von Anregungslicht angeordnet. Der Strahlengang des Anregungslichts ist in den Figuren durch offene Pfeile dargestellt. Wie es in der Querschnittsdarstellung von Figur 2b) zu sehen ist, wird Anregungslicht von einer Lichtquelle 11, die in einem Betreibergerät vorgesehen ist, im Wesentlichen senkrecht von unten in die Grundplatte 3 eingestrahlt und von der Spiegelfläche 6 reflektiert und in einem Winkel von 45° zur Spiegeloberfläche in Richtung der Längsachse der Messzelle 3 in die Messzelle eingeleitet. Durch die Messzelle 3 hindurchtretendes Transmissionslicht wird von den auf der gegenüberliegenden Seite angeordneten Spiegelflächen 6 reflektiert und in einem Winkel von 45° wieder in Richtung der Unterseite der Grundplatte 2 gelenkt, so dass es aus der Grundplatte 2 ausgekoppelt wird und auf einen Detektor 12, der in einem Betreibergerät vorgesehen ist, auftrifft.

Seitlich der Messzelle 3 sind in der Grundplatte weitere Spiegelflächen 5 vorgesehen, die von einer Fluidprobe in der Messzelle abgegebenes Emissionslicht, welches seitlich aus der Messzelle austritt, reflektierend zur Unterseite der Grundplatte 2 lenken, wo es ausgekoppelt wird und auf einen Detektor 13, der in einem Betreibergerät vorgesehen ist, auftrifft.

Die Figuren 2a) und 2b) zeigen schematische Querschnitte des Messchips gemäß Figur 1 entlang den Linien A-A bzw. B-B. Die Grundplatte 2 des Messchips 1 besteht aus transparentem Polymermaterial. Die Spiegelflächen 5 seitlich der Messzelle 3 sind in Figur 2a) und die Spiegelflächen 6, 6', die in Verlängerung der Längsachse der Messzelle 3 in der Grundplatte angeordnet sind, in Figur 2b) dargestellt. Die Spiegelflächen 5, 6, 6' werden durch die Grenzflächen zwischen dem transparenten Polymermaterial und einem von diesem verschiedenen Medium, in diesem Falle Luft, gebildet. Hierfür sind in der Grundplatte entsprechende Ausnehmungen vorgesehen, die eine Grenzfläche schaffen, die in einem Winkel von 45° zu den Austrittswänden der Messzelle 3 bzw. der Grundplatte 2 stehen. Diese Grenzflächen zwischen dem Polymermaterial und Luft sind aufgrund der Materialauswahl und ihrer Oberflächenbeschaffenheit unterhalb eines vorgegebenen Lichteinfallswinkels totalreflektierend. Der Lichteinfallswinkel, bei dem die Grenzflächen totalreflektierend sind, ist in jedem Fall kleiner 45° zur Spiegeloberfläche. Der Strahlengang von Licht, das von einer Fluidprobe in der Messzelle 3 emittiert wird, ist in Figur 2a) durch dünne Pfeile beispielhaft dargestellt.

Figur 2 zeigt, dass auf dem Messchip auf der Oberseite der Grundplatte eine weitere Spiegelfläche 5' vorgesehen ist, die in Figur 1 nicht dargestellt ist. Die Spiegelfläche 5' wird von einer reflektierenden Deckfolie, beispielsweise einer Metallfolie, gebildet. Emittiertes Licht, das von der Fluidprobe in der Messzelle 3 nicht seitlich aus der Messzelle austritt, sondern in Figur 2 nach oben, wird an der durch die Deckfolie ausgebildeten Spiegelfläche 5' zurückreflektiert und entweder direkt zur Unterseite der Grundplatte 3 gelenkt oder auf eine der Spiegelflächen 5, wo es dann weiter in Richtung der Unterseite der Grundplatte 3 umgelenkt wird.

Figur 2a) zeigt weiterhin in schematischer Darstellung einen Detektor 13, der in einem Betreibergerät vorgesehen ist und das von einer Fluidprobe in der Messzelle 3 emittierte Licht, das aus der Grundplatte nach unten ausgekoppelt wird, empfängt. In dem Betreibergerät wird das von dem Detektor 13 empfangene Licht durch entsprechende Elektronik ausgewertet. Figur 2b) zeigt weiterhin schematisch eine in einem Betreibergerät vorgesehene Lichtquelle 11 für die Einkopplung von Anregungslicht sowie einen weiteren Detektor 12 für den Empfang von Transmissionslicht.

Die in Figur 1 dargestellten Spiegelflächen 5 sind als mehrere einzelne Spiegelflächen dargestellt (jeweils sieben einzelne Spiegelflächen auf jeder Seite der Messzelle). Diese Art der Spiegelflächenanordnung eignet sich beispielsweise für die Durchführung einer ortsaufgelösten Fluoreszenzmessung entlang der Messstrecke, wie beispielsweise für kinetische Messungen. Die Spiegelflächen können so ausgebildet sein, dass sie das aus der Messzelle austretende Emissionslicht entlang der Längsachse der Messzelle auf unterschiedliche Detektoren in einem Betreibergerät lenken oder auf einen ortsauflösenden Detektor. Alternativ können die Spiegelflächen 5 gemäß Figur 1 auf beiden Seiten der Messzelle 3 jeweils eine durchgehende Spiegelfläche sein, so dass möglichst viel des emittierten Lichts aus der Messzelle 3 mit oder ohne Ortsauflösung auf einen Detektor gelenkt wird.

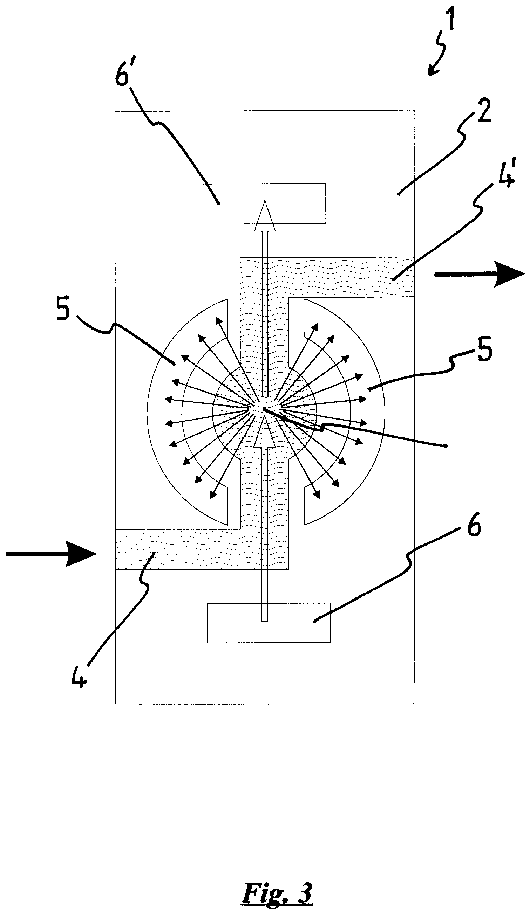

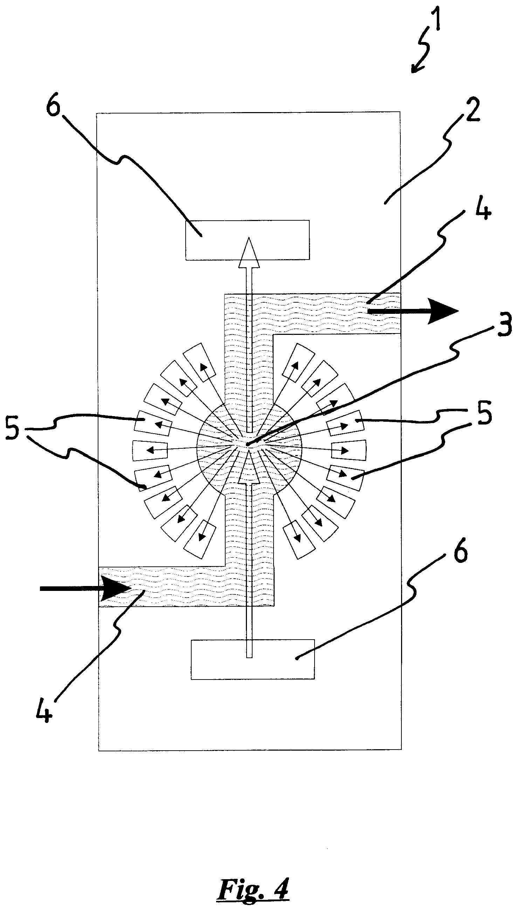

Figur 3 zeigt eine alternative Ausführungsform des erfindungsgemäßen Messchips, der sich gegenüber dem Messchip von Figur 1 im Wesentlichen durch die Ausgestaltung der Messzelle 3 und die Form der Spiegelflächen 5 unterscheidet. Die Messzelle 3 ist in der Draufsicht im Wesentlichen kreisförmig mit gerundeten Seitenflächen ausgebildet, und die Spiegelflächen 5 sind ebenfalls kreissegmentförmig um die Messzelle 3 herum ausgebildet. Die Ausführungsform des erfindungsgemäßen Messchips gemäß Figur 3 eignet sich für alle Arten von Emissionsmessungen und insbesondere für winkelabhängige Streuungsmessungen. Die Spiegelflächen 5 sind durchgängige Spiegelflächen. Für eine winkelauflösende Messung sind in dem Betreibergerät mehrere Detektoren oder ein ortsauflösender Detektor vorgesehen. Figur 4 zeigt eine zu der Messzelle gemäß Figur 3 ähnliche Ausführungsform, wobei die Spiegelflächen 5 jedoch durch einzelne, voneinander getrennte Spiegelflächen gebildet werden.

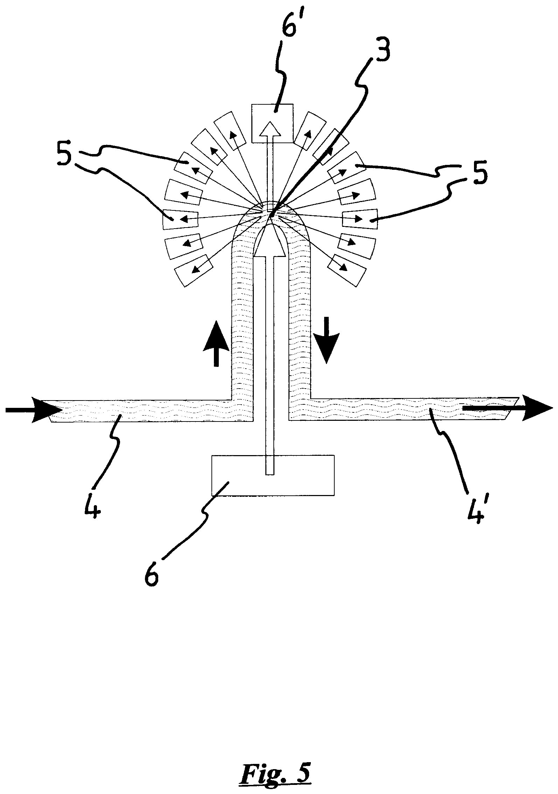

Figur 5 zeigt eine schematische Darstellung einer weiteren alternativen Ausführungsform des erfindungsgemäßen Messchips. In dieser Ausführungsform nimmt der Fluidkanal 4, 4' in der Grundplatte einen haarnadelförmigen Verlauf, und der Scheitelpunkt des haarnadelförmigen Verlaufs bildet die Messzelle 3 des Messchips. Über die Spiegelflächen 6 und 6' wird Anregungslicht in den Bereich der Messzelle 3 eingeleitet, wobei der Lichtstrahl seitlich auf den die Messzelle 3 bildenden Abschnitt des Fluidkanals auftrifft. Spiegelflächen 5 für die Umlenkung und Auskopplung von Emissions- oder Streulicht sind kreisabschnittförmig um den die Messzelle 3 bildenden Abschnitt des Fluidkanals herum angeordnet. Der Messchip gemäß Figur 5 ist für jede Art von Messungen geeignet, insbesondere für winkelauflösende Streuungsmessungen.

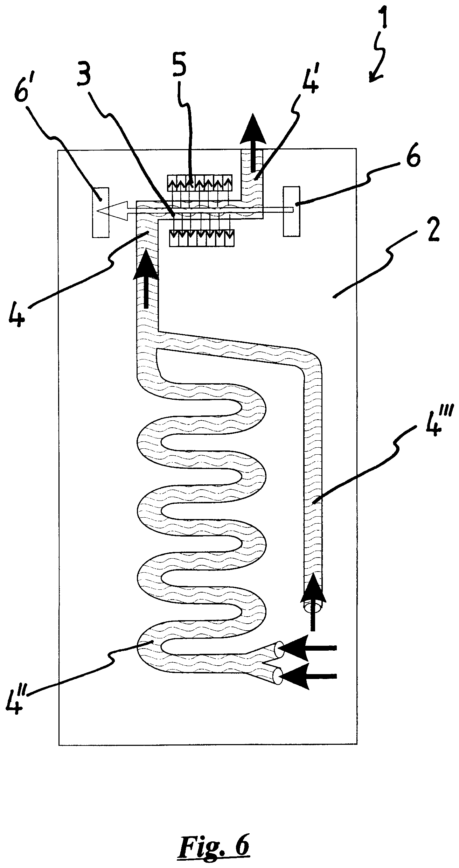

Figur 6 zeigt eine schematische Darstellung einer weiteren Ausführungsform des erfindungsgemäßen Messchips, wobei der Bereich der Grundplatte, der die Messzelle 3, die Spiegelflächen 6 und 6' für die Umlenkung des Anregungslichts, die Spiegelflächen 5 und den Fluidkanal 4' für die Abführung von Fluid umfasst, im Wesentlichen wie der Messchip gemäß Figur 1 ausgebildet ist. Zusätzlich sind in der Grundplatte weitere Fluidkanäle 4" und 4"' ausgebildet, wobei der Fluidkanal 4" zwei Einlässe aufweist und dann als eine Mischstrecke gewunden und mit mehreren Richtungswechseln in der Grundplatte verläuft. Durch einen weiteren Fluidkanal 4"' kann am Ende der Mischstrecke ein weiteres Fluid zudosiert werden. Diese Ausführungsform soll nur beispielhaft erläutern, wie weitere Elemente in der Grundplatte 2 des erfindungsgemäßen Messchips 1 vorgesehen sein können. Die Anzahl der Fluidkanäle, ihre Form und ihr Verlauf sind an die jeweiligen Anforderungen von durchzuführenden Reaktionen, Mischungen oder sonstigen Verfahrensschritten anzupassen. Beispielsweise können auch Reaktionskammern und weitere Fluidauslässe vorgesehen sein.

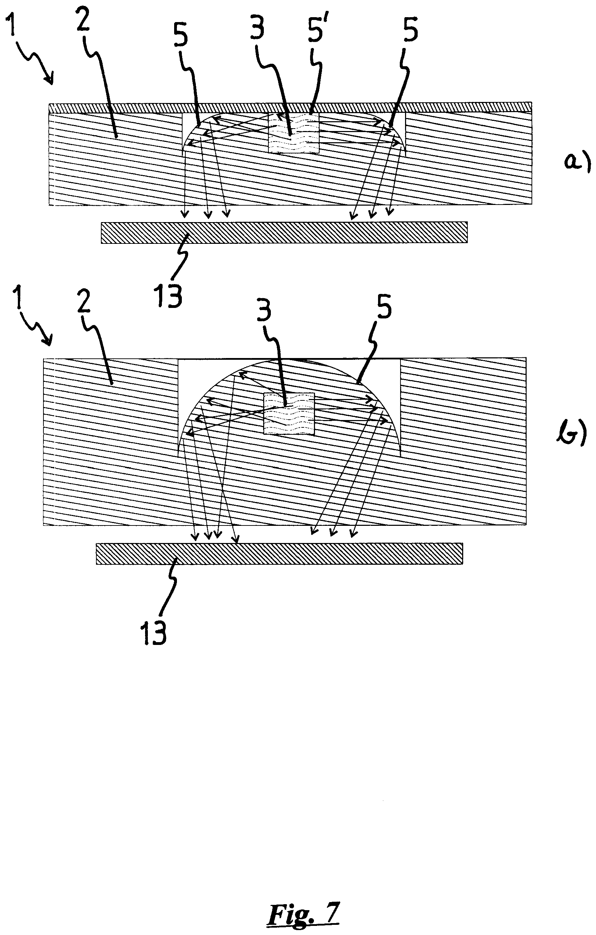

Figur 7 zeigt Varianten der erfindungsgemäßen Spiegelflächen für die Umlenkung von Emissions- oder Streulicht. Figur 7a) zeigt eine zu Figur 2a) ähnliche Ausführungsform, wobei die Spiegelflächen 5 jedoch für eine Lichtbündelung konvex gekrümmt sind. Figur 7b) zeigt eine halbkreisförmige, konvexe Spiegelfläche, die sich gegenüber der Bodenfläche der Grundplatte 2 halbkreisförmig um die Messzelle 3 herum erstreckt und von der Messzelle zur Seite und nach oben emittiertes bzw. gestreutes Licht reflektiert.

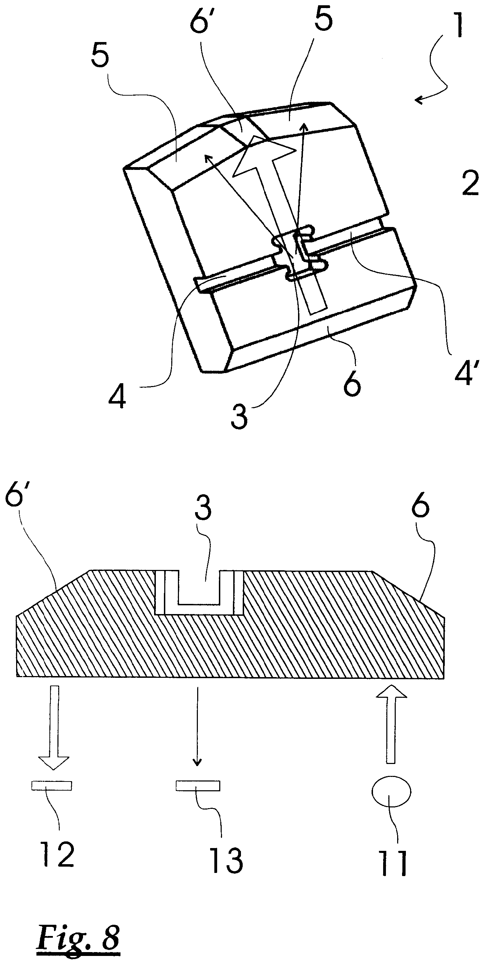

Figur 8 zeigt eine weitere alternative Ausführungsform des erfindungsgemäßen Messchips zur Durchführung einer winkelabhängigen Streuungsmessung in perspektivischer Darstellung von oben und im Querschnitt von der Seite. Anregungslicht von einer Lichtquelle 11 in einem Betreibergerät wird von der Unterseite in die Grundplatte 2 des Messchips 1 eingekoppelt und an einer Spiegelfläche 6 in Richtung der Messzelle 3 umgelenkt. Durch die Messzelle transmittiertes Licht wird auf der gegenüberliegenden Seite der Messzelle 3 von einer Spiegelfläche 6' erneut in Richtung der Unterseite der Grundplatte 2 umgelenkt und aus dem Messchip ausgekoppelt. Streulicht, das aus der Messzelle 3 direkt in Richtung der Unterseite der Grundplatte 2 austritt, entspricht einem Streuwinkel von 90° und wird dort unterhalb der Grundplatte 2 von einem Detektor 13 in einem Betreibergerät empfangen. Licht, das in einem niedrigeren Streuwinkel, in diesem Fall einem Streuwinkel von 12°, von der Fluidprobe in der Messzelle 3 gestreut wird, trifft auf die Spiegelflächen 5 auf und wird von diesen in einem Winkel von 45° in Richtung der Unterseite der Grundplatte 2 abgelenkt, aus dieser an der Unterseite ausgekoppelt und von einem entsprechenden Detektor (nicht dargestellt) empfangen. Aus dem Verhältnis der Streulichtintensitäten bei den Streuwinkeln von 90° und 12° lassen sich beispielsweise der Kolloidanteil sowie die Teilchengrößenverteilung in einer Wasserprobe bestimmen.

### Bezugszeichenliste

- 1: Messchip
- 2: Grundplatte
- 3: Messzelle
- 4, 4': Fluidkanäle
- 5, 5': Spiegelflächen (Emission, Streuung)
- 6, 6': Spiegelflächen (Transmission)
- 11: Lichtquelle (Anregungslicht)
- 12: Detektor (Transmissionslicht)
- 13: Detektor (Emissionslicht, Streuungslicht)

## Patentansprüche

1. Messchip (1) für die Durchführung von Messungen der Emission und/oder Streuung von Licht durch eine Fluidprobe in einem Betreibergerät, wobei
der Messchip eine aus einem transparenten Polymermaterial hergestellte Grundplatte (2) aufweist und in der Grundplatte (2) wenigstens eine Messzelle (3) für die Aufnahme einer Fluidprobe und Fluidkanäle (4, 4') für die Zuführung und Abführung von Fluid zu und von der Messzelle (3) vorgesehen sind, **dadurch gekennzeichnet, dass**
in der Grundplatte (2) außerhalb der Messzelle (3) eine Spiegelfäche oder Spiegelflächen (5) vorgesehen ist/sind, die so in der Grundplatte (2) angeordnet ist/sind, dass von einer Fluidprobe in der Messzelle (3) emittiertes und/oder gestreutes Licht daran stets in das Polymermaterial der Grundplatte (2) reflektiert und aus dem Messchip (13) in Richtung eines in dem Betreibergerät vorgesehenen Lichtdetektors gelenkt wird.

2. Messchip (1) nach Anspruch 1, **dadurch gekennzeichnet, dass** in der Grundplatte (2) außerhalb der Messzelle (3) eine weitere Spiegelfäche oder weitere Spiegelflächen (6) vorgesehen ist/sind, die so angeordnet ist/sind, dass sie von einer außerhalb des Messchips (1) angeordneten Lichtquelle (11) in den Messchip (1) eingekoppeltes Anregungslicht in die Messzelle (3) lenkt/lenken.

3. Messchip (1) nach einem der Ansprüche 1 oder 2, **dadurch gekennzeichnet, dass** in der Grundplatte (2) außerhalb der Messzelle (3) eine weitere Spiegelfäche oder weitere Spiegelflächen (6') vorgesehen ist/sind, die so angeordnet ist/sind, dass sie durch die Messzelle (1) hindurchtretendes Transmissionslicht, das als Anregungslicht in den Messchip (1) eingekoppelt wird, aus dem Messchip (1) lenkt/lenken.

4. Messchip (1) nach einem der Ansprüche 2 oder 3, **dadurch gekennzeichnet, dass** die weitere Spiegelfäche oder die weiteren Spiegelflächen (6, 6') in der Grundplatte (2) so angeordnet sind, dass an den Spiegelflächen reflektiertes Licht stets in das Polymermaterial der Grundplatte (2) reflektiert wird.

5. Messchip nach einem der vorangegangenen Ansprüche, **dadurch gekennzeichnet, dass** die Messzelle (3) in der Fluidströmungsrichtung einen rechteckigen oder quadratischen Querschnitt besitzt.

6. Messchip nach einem der vorangegangenen Ansprüche, **dadurch gekennzeichnet, dass** die Grundplatte (2) aus transparentem Acrylat, Polymethylacrylat, Polymethylmethacrylat, Polycarbonat, Polystyrol, Polyimid, Cycloolefincopolymer (COC), Cycloolefinpolymer (COP), Polyurethan, Epoxidharz, halogeniertem Acrylat, deuteriertem Polysiloxan, PDMS, fluoriertem Polyimid, Polyetherimid, Perfluorcyclobutan, Perfluorvinylethercopolymer (Teflon AF), Perfluorvinylethercyclopolymer (CYTOP), Polytetrafluorethylen (PTFE), fluoriertem Polyarylethersulfid (FRAESI), anorganischem Polymerglas, Polymethylmethacrylat-Copolymer (P2ANS) hergestellt ist.

7. Messchip nach einem der vorangegangenen Ansprüche, **dadurch gekennzeichnet, dass** wenigstens einige der Spiegelflächen (5, 6, 6') als Grenzflächen zwischen dem transparenten Polymermaterial der Grundplatte (2) und einem gasförmigen oder flüssigen Medium, vorzugsweise einem gasförmigen Medium und besonders bevorzugt Luft ausgebildet sind und das Polymermaterial, das gasförmige oder flüssige Medium und die Oberflächenbeschaffenheit der als Spiegelflächen ausgebildeten Grenzflächen so ausgewählt sind, dass die als Spiegelflächen ausgebildeten Grenzflächen unterhalb eines vorgegebenen Lichteinfallswinkels, vorzugsweise bei einem Lichteinfallswinkel kleiner oder gleich 45° zur Oberfläche totalreflektierend sind.

8. Messchip nach einem der vorangegangenen Ansprüche, **dadurch gekennzeichnet, dass** die Grundplatte (2) des Messchips (1) eine ebene bzw. planare Bodenfläche aufweist.

9. Messchip nach einem der vorangegangenen Ansprüche, **dadurch gekennzeichnet, dass** die Spiegelflächen (5, 6, 6') eben bzw. planar oder gekrümmt ausgebildet sind.

10. Vorrichtung für die Durchführung von Messungen der Emission und/oder Streuung von Licht durch eine Fluidprobe, **dadurch gekennzeichnet, dass** die Vorrichtung einen Messchip (1) nach einem der vorangegangenen Ansprüche und ein Betreibergerät umfaßt, wobei das Betreibergerät einen Raum für die Aufnahme des Messchips (1) und wenigstens eine Lichtquelle (11) für das Einkoppeln von Licht in den Messchip (1) und einen Detektor oder mehrere Detektoren (12, 13) für die Detektion von aus dem Messchip (1) ausgekoppeltem Licht aufweist.

11. Vorrichtung nach Anspruch 10, **dadurch gekennzeichnet, dass** in dem Betreibergerät für die Detektion von Emissionslicht oder Streulicht ein ortsauflösender Detektor (13) vorgesehen ist.

## Claims

1. A measurement chip (1) for carrying out measurements of emission and/or scattering of light by a fluid sample in an operator unit, wherein
the measurement chip has a base plate (2) produced from a transparent polymer material, and wherein there are provided in the base plate (2) at least one measurement cell (3) for receiving a fluid sample and fluid passages (4, 4') for supplying and discharging fluid to and from the measurement cell (3), **characterised in that**
provided in the base plate (2) outside the measurement cell (3) there is/are (a) mirror surface(s) (5) which is/are so arranged in the base plate (2) that light emitted from and/or scattered by a fluid sample in the measurement cell (3) is always reflected in the polymer material of the base plate (2) and is directed from the measurement chip (13) in the direction of a light detector provided in the operator unit.

2. A measurement chip (1) as set forth in claim 1 **characterised in that** a further mirror surface or further mirror surfaces (6) is/are provided in the base plate (2) outside the measurement cell (3), the mirror surface(s) being so arranged that it/they direct(s) into the measurement cell (3) excitation light which is coupled into the measurement chip (1) from a light source (11) arranged outside the measurement chip (1).

3. A measurement chip (1) as set forth in one of claims 1 or 2 **characterised in that** a further mirror surface or further mirror surfaces (6') is/are provided in the base plate (2) outside the measurement cell (3), the mirror surface(s) (6') being so arranged that it/they direct(s) transmission light which passes through the measurement cell (1) and which is coupled into the measurement chip (1) as excitation light from the measurement chip (1).

4. A measurement chip (1) as set forth in one of claims 2 or 3 **characterised in that** the further mirror surface or the further mirror surfaces (6, 6') is/are arranged in the base plate (2) in such a way that light reflected at the mirror surfaces is always reflected into the polymer material of the base plate (2).

5. A measurement chip as set forth in one of the preceding claims **characterised in that** the measurement cell (3) is of a rectangular or square cross-section in the fluid flow direction.

6. A measurement chip as set forth in one of the preceding claims **characterised in that** the base plate (2) is produced from transparent acrylate, polymethylacrylate, polymethylmethacrylate, polycarbonate, polystyrene, polyimide, cycloolefin copolymer (COC), cycloolefin polymer (COP), polyurethane, epoxy resin, halogenated acrylate, deuterised polysiloxane, PDMS, fluorinated polyimide, polyetherimide, perfluorocyclobutane, perfluorovinylether copolymer (Teflon AF), perfluorovinylether cyclopolymer (CYTOP), polytetrafluoroethylene (PTFE), fluorinated polyarylether sulfide (FRAESI), inorganic polymer glass and polymethylmethacrylate copolymer (P2ANS).

7. A measurement chip as set forth in one of the preceding claims **characterised in that** at least some of the mirror surfaces (5, 6, 6') are in the form of interfaces between the transparent polymer material of the base plate (2) and a gaseous or liquid medium, preferably a gaseous medium and particularly preferably air, and the polymer material, the gaseous or liquid medium and the surface nature of the interfaces which are in the form of mirror surfaces are so selected that the interfaces in the form of mirror surfaces are totally reflecting below a predetermined angle of light incidence, preferably at an incidence angle of less than or equal to 45° to the surface.

8. A measurement chip as set forth in one of the preceding claims **characterised in that** the base plate (2) of the measurement chip (1) has a flat or planar bottom surface.

9. A measurement chip as set forth in one of the preceding claims **characterised in that** the mirror surfaces (5, 6, 6') are of a flat or planar or curved configuration.

10. A device for carrying out measurements of emission and/or scattering of light by a fluid sample **characterised in that** the device includes a measurement chip (1) as set forth in one of the preceding claims and an operator unit, wherein the operator unit has a space for receiving the measurement chip (1) and at least one light source (11) for coupling light into the measurement chip (1) and a detector or a plurality of detectors (12, 13) for the detection of light coupled out of the measurement chip (1).

11. A device as set forth in claim 10 **characterised in that** a position-resolving detector (13) is provided in the operator unit for the detection of emission light or scatter light.

## Revendications

1. Puce de mesure (1) servant à réaliser des mesures de l'émission et/ou de la dispersion de lumière à travers un échantillon de fluide dans un appareil d'opérateur, dans laquelle
la puce de mesure comporte une plaque de base (2) réalisée dans un matériau polymère transparent, et dans laquelle sont prévus dans la plaque de base (2) au moins une cellule de mesure (3) destinée à recevoir un échantillon de fluide et des canaux de fluide (4, 4') pour amener et évacuer du fluide vers et depuis la cellule de mesure (3), **caractérisée en ce qu'**est/sont prévue(s) dans la plaque de base (2), à l'extérieur de la cellule de mesure (3), une surface réfléchissante ou des surfaces réfléchissantes (5), qui est/sont disposée(s) dans la plaque de base (2) de façon telle que la lumière émise et/ou diffusée par un échantillon de fluide dans la cellule de mesure (3) est constamment réfléchie dans le matériau polymère de la plaque de base (2) et dirigée hors de la puce de mesure (13) en direction d'un détecteur de lumière prévu dans l'appareil d'opérateur.

2. Puce de mesure (1) selon la revendication 1, **caractérisée en ce qu'**est/que sont prévue(s) dans la plaque de base (2), à l'extérieur de la cellule de mesure (3), une autre surface réfléchissante ou d'autres surfaces réfléchissantes (6), qui est/sont disposée(s) de façon à diriger dans la cellule de mesure (3) la lumière d'excitation couplée dans la puce de mesure (1) par une source lumineuse (11) disposée à l'extérieur de la puce de mesure (1).

3. Puce de mesure (1) selon l'une des revendications 1 ou 2, **caractérisée en ce qu'**est/que sont prévue(s) dans la plaque de base (2), à l'extérieur de la cellule de mesure (3), une autre surface réfléchissante ou d'autres surfaces réfléchissantes (6'), qui est/sont disposée(s) de façon à diriger hors de la puce de mesure (1) la lumière de transmission traversant la cellule de mesure, laquelle est couplée dans la puce de mesure (1) en tant que lumière d'excitation.

4. Puce de mesure (1) selon l'une des revendications 2 ou 3, **caractérisée en ce que** l'autre surface réfléchissante ou les autres surfaces réfléchissantes (6, 6') sont disposées dans la plaque de base (2) de façon telle que la lumière réfléchie sur les surfaces réfléchissantes est constamment réfléchie dans le matériau polymère de la plaque de base (2).

5. Puce de mesure selon l'une des revendications précédentes, **caractérisée en ce que** la cellule de mesure (3) présente, dans la direction d'écoulement du fluide, une section transversale rectangulaire ou carrée.

6. Puce de mesure selon l'une des revendications précédentes, **caractérisée en ce que** la plaque de base (2) est réalisée en acrylate transparent, polyméthylacrylate, polyméthacrylate de méthyle, polycarbonate, polystyrène, polyimide, copolymère de cyclooléfine (COC), polymère de cyclooléfine (COP), polyuréthane, résine époxy, acrylate halogéné, polysiloxane deutérié, PDMS, polyimide fluoré, polyétherimide, perfluorocyclobutane, copolymère de perfluorovinyléther (téflon AF), cyclopolymère de perfluorovinyléther (CYTOP), polytétrafluoréthylène (PTFE), sulfure de polyaryléther fluoré (FRAESI), verre polymère inorganique, copolymère de polyméthacrylate de méthyle (P2ANS).

7. Puce de mesure selon l'une des revendications précédentes, **caractérisée en ce qu'**au moins quelques-unes des surfaces réfléchissantes (5, 6, 6') sont conçues en tant qu'interfaces entre le matériau polymère transparent de la plaque de base (2) et un milieu gazeux ou liquide, de préférence un milieu gazeux et plus préférablement de l'air, et le matériau polymère, le milieu gazeux ou liquide et l'état de surface des interfaces réalisées en tant que surfaces réfléchissantes sont choisis de façon telle que les interfaces réalisées en tant que surfaces réfléchissantes sont totalement réfléchissantes au-dessous d'un angle d'incidence de la lumière prédéterminé, de préférence à un angle d'incidence de la lumière inférieur ou égal à 45° par rapport à la surface.

8. Puce de mesure selon l'une des revendications précédentes, **caractérisée en ce que** la plaque de base (2) de la puce de mesure (1) présente une surface de fond plane ou planaire.

9. Puce de mesure selon l'une des revendications précédentes, **caractérisée en ce que** les surfaces réfléchissantes (5, 6, 6') sont formées de manière plane ou planaire ou incurvée.

10. Dispositif servant à réaliser des mesures de l'émission et/ou de la dispersion de lumière à travers un échantillon de fluide, **caractérisé en ce que** le dispositif comprend une puce de mesure (1) selon l'une des revendications précédentes et un appareil d'opérateur, l'appareil d'opérateur comportant un espace destiné à recevoir la puce de mesure (1) et au moins une source lumineuse (11) pour le couplage de la lumière dans la puce de mesure (1) et un détecteur ou plusieurs détecteurs (12, 13) permettant la détection de la lumière extraite de la puce de mesure (1).

11. Dispositif selon la revendication 10, **caractérisé en ce qu'**est prévu dans l'appareil d'opérateur un détecteur à résolution spatiale (13) permettant la détection de la lumière d'émission ou de la lumière diffusée.
